# EUROPEAN PATENT SPECIFICATION

(11) **EP 2 427 297 B1**
(45) Date of publication and mention of the grant of the patent: **21.03.2018**
(21) Application number: 10715543.4
(22) Date of filing: 26.04.2010
(51) Int. Cl.: B23K 26/073, B23K 26/067

(54) **LASER WELDING SYSTEM AND METHOD FOR WELDING BY MEANS OF A LASER BEAM**
VORRICHTUNG UND VERFAHREN ZUM LASERSCHWEISSEN
DISPOSITIF ET PROCÉDÉ DE SOUDAGE AU LASER

(30) Priority: 07.05.2009 DE 102009020272
(43) Date of publication of application: 14.03.2012
(73) Proprietor: TE Connectivity Germany GmbH, 64625 Bensheim (DE)
(72) Inventor: BLEICHER, Martin, 74579 Fichtenau (DE); HAAG, Markus, 91602 Duerrwangen (DE)
(74) Representative: Grünecker Patent- und Rechtsanwälte PartG mbB
(86) International application number: PCT/EP2010/055533
(87) International publication number: WO 2010/127955

(56) References cited:
- DE-A1-102007 018 400
- US-A- 3 534 462
- US-A- 5 864 430
- US-A1- 2008 057 718
- US-A1- 2008 180 788

## Description

The present invention relates to a laser welding system comprising a source for a laser beam, a collimator which is adapted to collimate the laser beam, and a focusing means which is adapted to focus the collimated laser beam onto a concentrated point on a workpiece to be welded. Furthermore, the present invention also relates to a corresponding method for welding by means of a laser beam.

The method for welding by means of a laser beam is a welding method used to join different workpieces together. The laser beam offers a concentrated heat source allowing thin and deep weld seams. The laser welding process is often used in applications associated with large quantities, such as for example in the automotive industry.

The laser beam which is used has a power density, typically in the range of approx. 1 MW/cm². Thus, small regions are influenced by the concentrated heat of the laser beam. The width of the laser beam varies between 0.2 mm and 13 mm, for example, although smaller widths are used in the welding process. The depth of penetration of the heat emitted by the laser beam is proportional to the amount of power supplied and is also dependent on the location of the focusing point. Maximum penetration is achieved when the focusing point is optimally set.

A continuous or pulsed laser beam can be used, based on the application. Millisecond-long pulses are used to weld thin materials, such as for example razor blades, to one another, whereas continuous laser systems are used for deep weld seams.

The laser welding method is a diverse process which is able to weld carbon steels, high-grade steel, aluminium, titanium and plastics, for example. The welding speed is proportional to the amount of power emitted, but is dependent on the type and the thickness of the workpieces. The high performance of gas lasers makes them particularly suitable for large-quantity applications.

In the known laser welding processes, plastic plates, films and injection-moulded parts are welded by sharply focused laser beams, a laser beam focused in a point-by-point manner being used to weld or fuse the plastics materials. The course of the weld seam is implemented by a programmable beam guide of the laser beams or the movement of the workpieces.

However, the distribution of the beam intensity is a drawback of a planar connection using a laser beam focused in a point-by-point manner, as the Gaussian distribution of the intensity causes a non-uniform fusion.

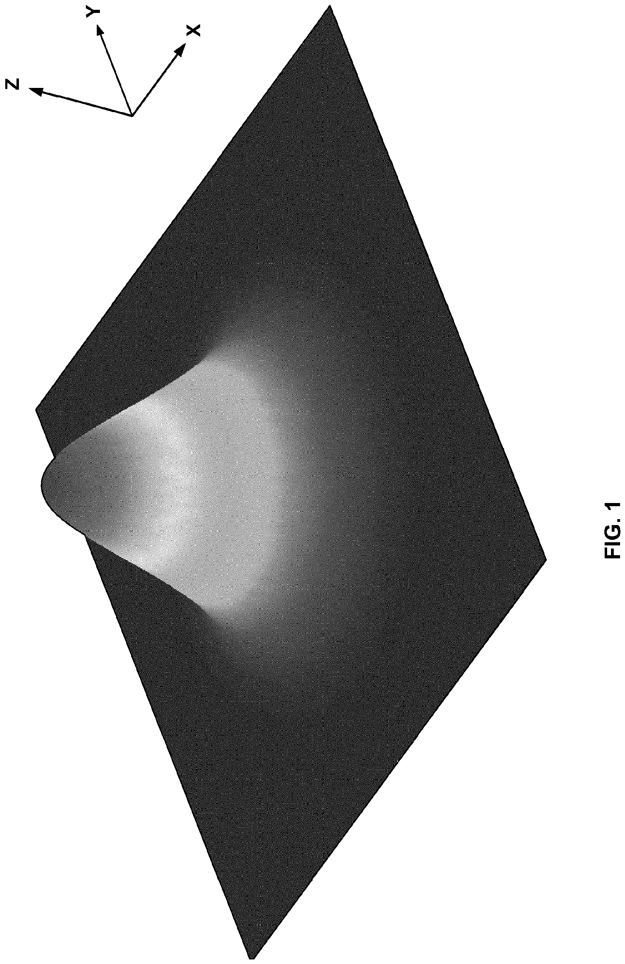

Fig. 1 shows a profile of a Gaussian power distribution of a laser beam generated by the processing optics of a laser welding system according to the prior art. In a power distribution of this type, the majority, approx. 90 %, of the energy is present at the centre, what is known as the hot spot. A laser beam of this type allows exclusively point-by-point laser welding.

That is to say, only a fraction of the welding spot contributes to the strength and a laser welding process of this type is particularly prone to error, as the position of the welding spot has to be determined very precisely. In the case of a poor position of the welding spot, a disadvantageous energy input is obtained. In addition, there is the risk, if for example a spring steel has to be welded, that a poor position of the welding spot will lead to a burn-out of the welding spot on the spring steel.

US 5864430 shows a Fourier transform beam shaping system that includes a phase or beam shaping element in conjunction with a Fourier transform lens. The optical field at the focal plane of the transform lens is proportional to the Fourier transform of the product of the input optical field and phase of the phase element. The configuration receives an input Gaussian beam, e.g., a laser beam, to be shaped. The desired beam profile is delivered at a target or output plane. One embodiment includes an afocal telescope for controlling the radius of the input Gaussian beam. The afocal telescope includes a minimum of two lenses, a front lens and a back lens.

DE 10 2007 018 400 A1 discloses an optical system having a collimation unit in front of a first optical unit, a second optical unit following the first optical unit, and a focussing unit. At least one axicon is inserted after the collimation unit to create an annular radiation field which is rotary-symmetric to the optical axis. The first optical unit has a transmissive or reflective optical component which forks the annular radiation field in two partial radiation fields, so that there exists a radiation free zone centric to the optical axis. The second optical unit has a transmissive or reflective optical component which re-unifies the partial radiation fields created.

The invention is based on the object of disclosing a laser welding system and a method for welding by means of a laser beam allowing a homogeneous welding region to be achieved.

This object is achieved by the subject matter of the independent claims. Preferred embodiments of the present invention form the subject matter of the dependent claims.

The invention will be described hereinafter in greater detail based on the configurations illustrated in the appended drawings. Similar or corresponding details of the laser welding system according to the invention arc provided with the same reference numerals in the figures, in which:
Fig. 1 shows a profile of a Gaussian power distribution of the laser beam;
Fig. 2 shows a profile of the power distribution of a laser beam after it has passed through processing optics of a laser welding system that is not covered by the present invention.
Fig. 3 shows a profile of the power distribution of a laser beam after it has passed through processing optics of a further laser welding that is not covered by the present invention.
Fig. 4 is a schematic view of processing optics according to a laser welding system that is not covered by the present invention.
Fig. 5 shows a profile of the power distribution of the laser beam after it has passed through the processing optics shown in Fig. 4;
Fig. 6 is a schematic view of processing optics according to another laser welding system that is not covered by the present invention.
Fig. 7 shows a profile of the power distribution of the laser beam after it has passed through the processing optics shown in Fig. 6;
Fig. 8 is a schematic view of processing optics according to an embodiment of a laser welding system according to the present invention; and
Fig. 9 shows a profile of the power distribution of the laser beam after it has passed through the processing optics shown in Fig. 8.

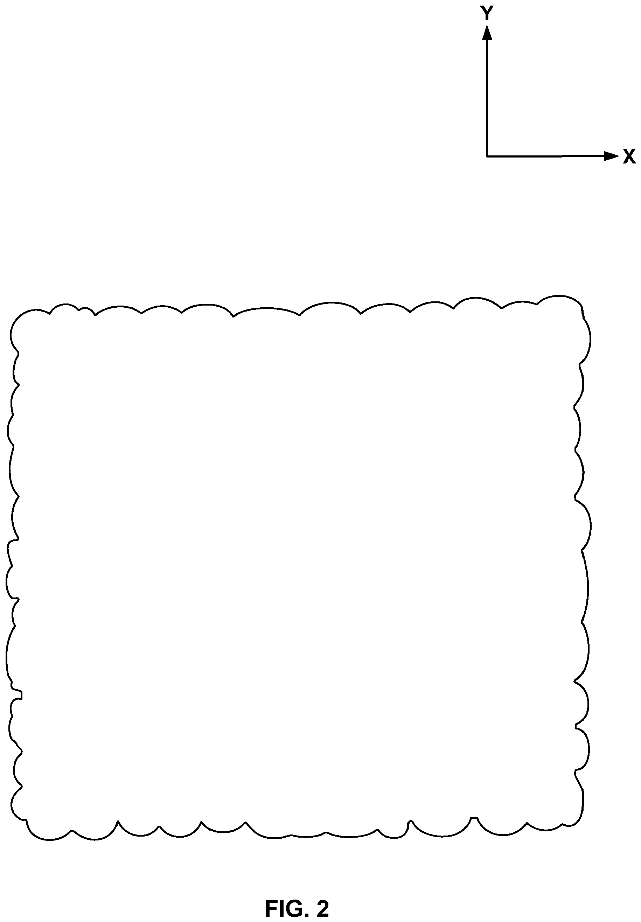

Fig. 2 shows a profile of the power distribution of a laser beam generated by processing optics of a laser welding system Compared to the Gaussian power distribution shown in Fig. 1, it is apparent from Fig. 2 that the power distribution of the laser beam is more homogeneous, as the power is not only concentrated on a hot spot positioned at the centre, but is distributed over a larger area.

The power of the central part of the laser beam shown in Fig. 2 is less than the power of the corresponding part of the laser beam shown in Fig. 1. However, in return, the power of the part of the laser beam shown in Fig. 2 that is positioned at the edge of the laser beam is greater than the power of the corresponding part of the laser beam shown in Fig. 1. Thus, the power distribution of the laser beam shown in Fig. 2 is spread along a first direction X running perpendicularly to the axis of the collimated laser beam.

Although Fig. 2 shows a spread of the power distribution of the laser beam along a first direction X running perpendicularly to the axis of the collimated laser beam, the first direction is not limited to an angle of 90° to the axis of the collimated laser beam, but rather the optical clement is adapted to spread the power distribution of the laser beam along a first direction running at any desired angle to the axis of the collimated laser beam. This can be achieved in that the optical element is positioned at the corresponding angle to the axis of the collimated laser beam, for example by tilting the main plane of the optical element in relation to the axis of the collimated laser beam.

In addition, the power distribution of the laser beam shown in Fig. 2 is spread along a second direction Y running perpendicularly to the axis of the collimated laser beam and to the first direction X.

Although Fig. 2 shows a spread of the power distribution of the laser beam along a first direction X and a second direction Y, the first direction X and the second direction Y being perpendicular to the axis of the collimated laser beam and to each other, a case of this type is a preferred embodiment. The second direction is not limited thereto; on the contrary, the power distribution of the laser beam is spread along a second direction running at any desired angle to the axis and to the first direction.

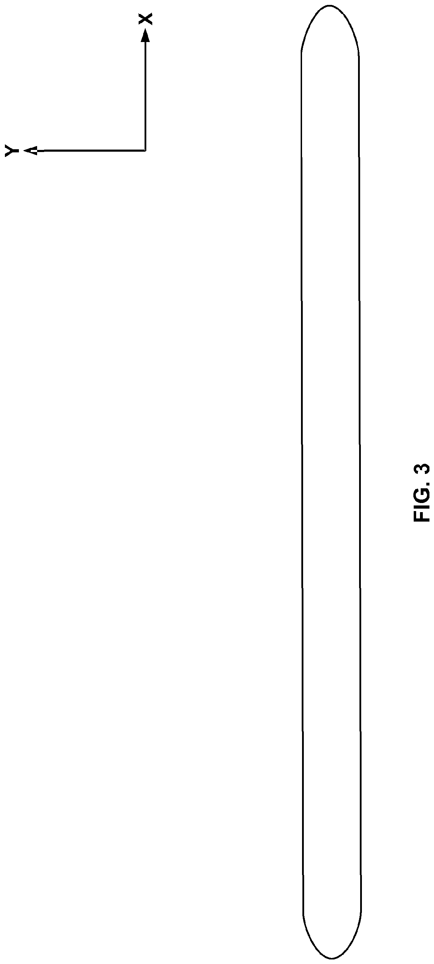

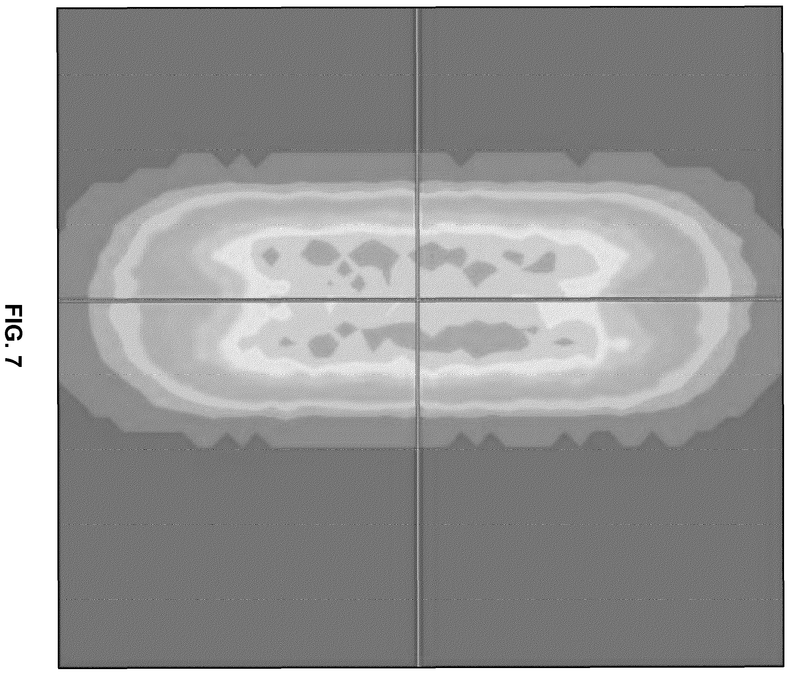

Fig. 3 shows another profile of the power distribution of the laser beam being spread exclusively along the direction X. However, the power of the laser beam can equally be distributed along the direction Y, such as is illustrated in Fig. 7. The direction is not limited to a specific angle and the power of the laser beam can in fact be distributed at any desired angle.

According to one example, the optical element is adapted to spread the power distribution of the laser beam onto at least two points on the workpiece to be welded, the at least two points being arranged in series. The power distribution of the laser beam can also be spread along at least one line on the workpiece to be welded, such as may be seen in Fig. 3, for example. However, the power distribution of the laser beam can also be spread along two lines on the workpiece to be welded, the at least two lines being arranged in series.

The manner in which a homogeneous welding region of this type can be achieved will be described hereinafter.

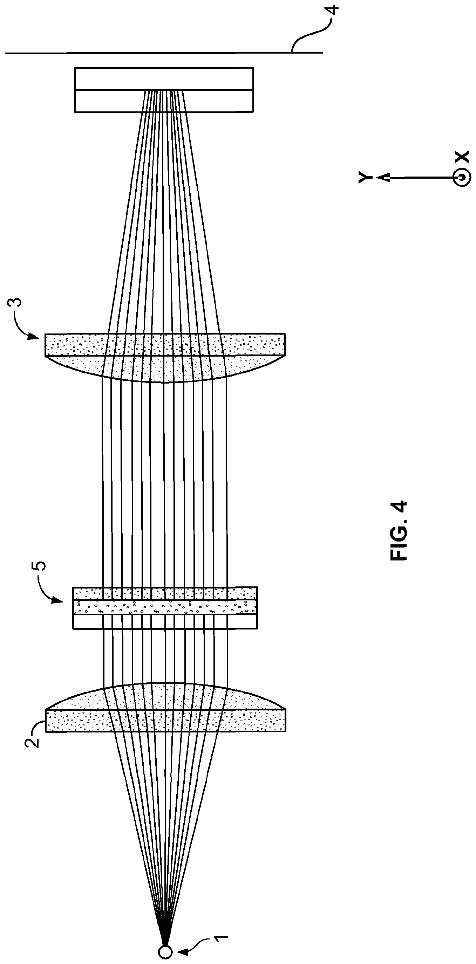

Fig. 4 is a schematic view of processing optics according to a first embodiment of a laser welding system. The processing optics comprise a source 1 for a laser beam, a collimator 2 which collimates the laser beam, a focusing means 3, for example a lens, which focuses the collimated laser beam onto a workpiece 4 to be welded.

An optical element 5, which allows the power distribution of the laser beam to be spread at least along a direction running at an angle to an axis of the collimated laser beam, is arranged between the collimator 2 and the focusing means 3.

In the example of Fig. 4, the optical element 5 is arranged in such a way that its plane runs substantially parallel to the plane of the collimator 2 and of the focusing means 3. However, the optical element 5 can be tilted, so that its plane is arranged at an angle to the plane of the collimator 2 and of the focusing means 3. Thus, the power distribution of the laser beam can be spread along a direction running at any desired angle to the axis of the collimatcd laser beam.

According to an example the optical element 5 is an arrangement of microlenses.

Microlenses are used wherever optical systems and measurements have to be size-reduced into the millimetre range. However, miniature lenses are also used in systems of optical data transmission, for example for the coupling of fibre optics or in the field of what are known as "flat" optics. In this case, instead of one large lens, a large number of small lenses are used next to one another and much shorter imaging distances are thus achieved. The original and image are thus much closer together. This allows the overall depth of optical apparatuses to be greatly reduced. These flat optical systems are currently already used in various types of scanners and copiers. The original documents arc scanned with microlenses and transferred to the light-sensitive drum.

According to a further example the optical element 5 is a diffractive optical element instead of an arrangement of microlenses.

A diffractive optical element is a substrate on which a microstructure is plotted, allowing almost any desired diffractive effects to be generated. Specific microstructures are formed by a lithographic etching method. Diffractive optical elements arc used to shape laser beams by diffraction on a grating or to break them down into a plurality of partial beams. Different materials can be used, such as for example ZnSe, ZnS or GaAs.

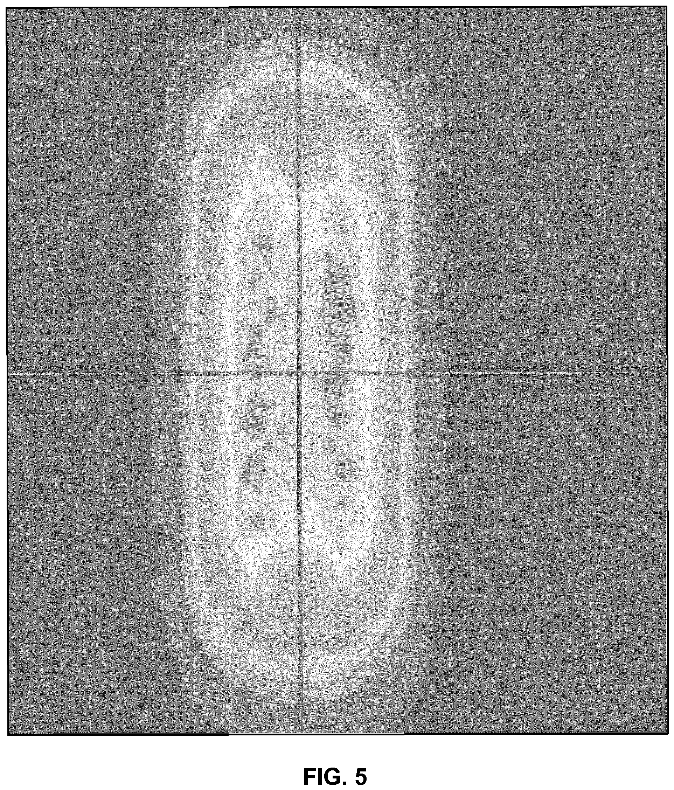

The optical element 5, which is arranged between the collimator 2 and the focusing means 3, allows the power distribution of the collimated laser beam to be spread along a first direction running at an angle to the axis of the collimated laser beam. Fig. 5 shows a spread of the power distribution perpendicularly to the axis of the collimated laser beam along the first direction Y.

However, according to one example the power distribution of the laser beam can also be spread along a first direction and a second direction, the second direction running perpendicularly to the axis of the collimated laser beam and to the first direction. The power distribution of the laser beam can be spread in accordance with at least one of a cuboidal, rectangular, trapezoidal, oval-shaped or annular pattern on the workpiece to be spread. The corresponding pattern is implemented by the corresponding selection of the optical element.

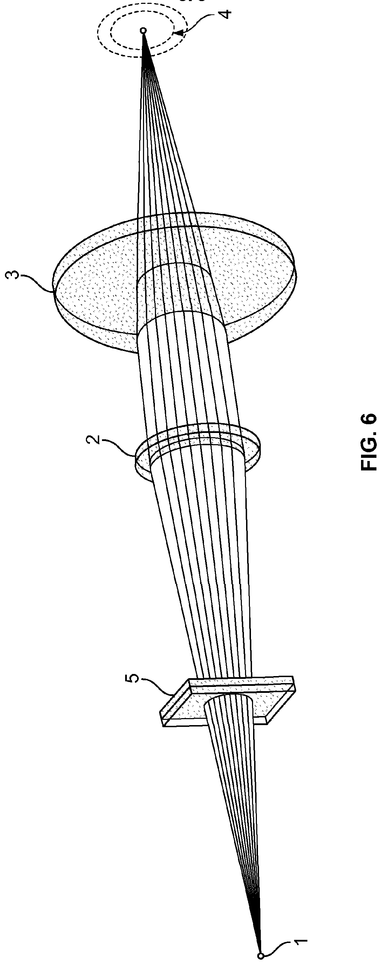

Fig. 6 is a schematic view of processing optics according to a second laser welding system.

The processing optics comprise a source 1 for a laser beam, a collimator 2 which collimates the laser beam, a focusing means 3, for example a lens, which focuses the collimated laser beam onto a workpiece 4 to be welded.

In this embodiment, the optical element 5 is arranged between the source 1 for the laser beam and the collimator 2. Fig. 7 shows the spread of the power distribution along the first direction Y. However, the power distribution can also be spread at any desired angle.

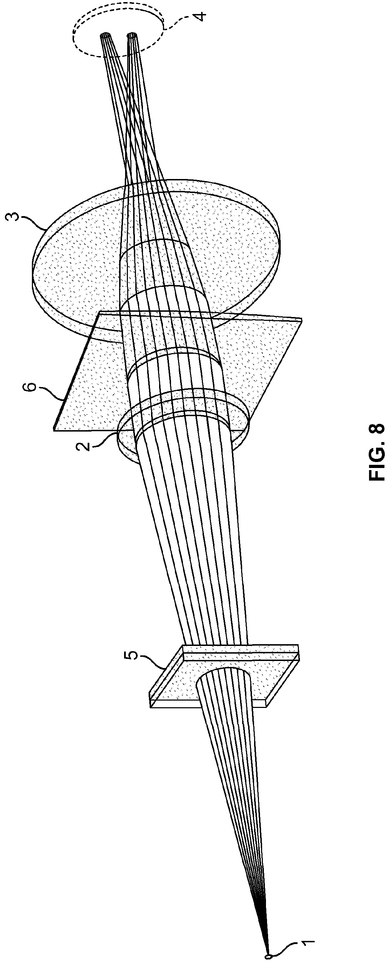

Fig. 8 is a schematic view of processing optics according to an embodiment of a laser welding system according to the present invention.

The processing optics comprises a source 1 for a laser beam, a collimator 2 which collimates the laser beam, a focusing means 3, for example a lens, which focuses the collimated laser beam onto a workpiece 4 to be welded.

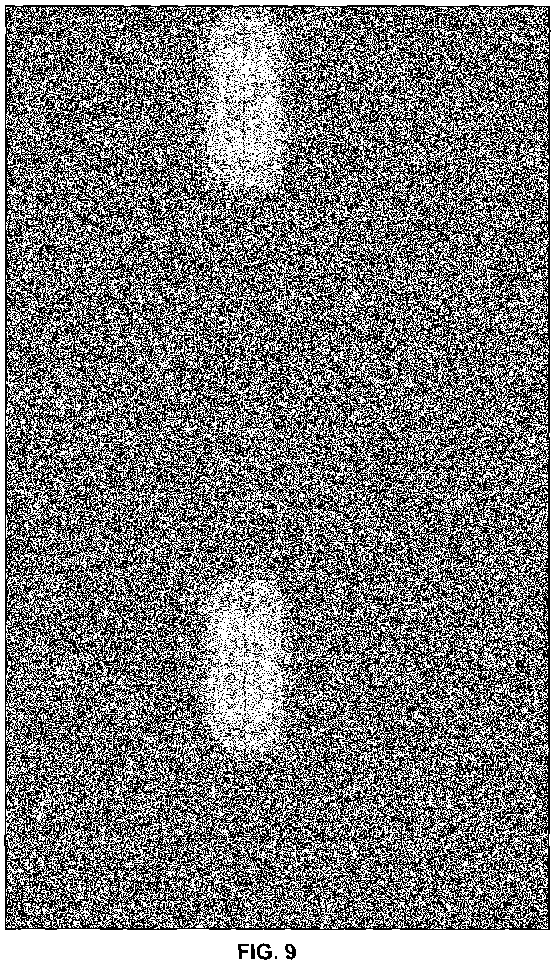

In this embodiment, the optical element 5 is arranged between the source 1 for the laser beam and the collimator 2. In addition, a bifocal element is arranged between the collimator 2 and the focusing means 3. Fig. 9 shows the spread of the power distribution of the two laser beams generated by the bifocal element along the first direction Y.

The present invention allows a homogeneous welding region to be achieved in that the power distribution is spread along a direction running at an angle to the axis of the collimated laser beam. This ensures a more advantageous energy input in the case of a poor position of the welding spot. The invention is particularly suitable for line welding during a stamping operation.

## Claims

1. Laser welding system comprising:
a source (1) for a laser beam;
a collimator (2) which is adapted to collimate the laser beam; and
a focusing means (3) which is adapted to focus the collimated laser beam onto a concentrated point on a workpiece (4) to be welded,
wherein an optical element (5) is arranged between the collimator (2) and the focusing means (3), the optical element being adapted to spread a power distribution of the laser beam along a first direction running at an angle to an axis of the collimated laser beam,
**characterized by**
a bifocal element (6) which is arranged either between the optical element (5) and the collimator (2) or between the optical element (5) and the focusing means (3).

2. Laser welding system comprising:
a source (1) for a laser beam,
a collimator (2) which is adapted to collimate the laser beam, and
a focusing means (3) which is adapted to focus the collimated laser beam onto a concentrated point on a workpiece (4) to be welded,
wherein an optical element (5) is arranged between the source (1) for the laser beam and the collimator (2), the optical element being adapted to spread a power distribution of the laser beam along a first direction running at an angle to an axis of the collimated laser beam,
**characterized by**
a bifocal element (6) which is arranged between the collimator (2) and the focusing means (3).

3. Laser welding system according to claim 1 or 2, wherein the first direction runs substantially perpendicularly to the axis of the collimated laser beam.

4. Laser welding system according to one of claims 1 to 3, wherein the optical element (5) is adapted to spread the power distribution of the laser beam onto at least two points on the workpiece (4) to be welded, the at least two points being preferably arranged in series.

5. Laser welding system according to one of claims 1 to 4, wherein the optical element (5) is adapted to spread the power distribution of the laser beam along at least one line on the workpiece (4) to be welded.

6. Laser welding system according to claim 5, wherein the optical element (5) is adapted to spread the power distribution of the laser beam along at least two lines on the workpiece (4) to be welded, the at least two lines being preferably arranged in series.

7. Laser welding system according to one of claims 1 to 6, wherein the optical element (5) is adapted to spread the power distribution of the laser beam along the first direction and a second direction, the second direction running at an angle to the axis of the collimated laser beam and to the first direction.

8. Laser welding system according to claim 7, wherein the second direction runs substantially perpendicularly to the axis of the collimated laser beam and to the first direction.

9. Laser welding system according to claim 7 or 8, wherein the optical element (5) is adapted to spread the power distribution of the laser beam in accordance with at least one of a cuboidal, rectangular, trapezoidal, oval-shaped or annular pattern on the workpiece (4) to be welded.

10. Laser welding system according to one of claims 1 to 9, wherein the optical element (5) is an arrangement of microlenses.

11. Laser welding system according to one of claims 1 to 9, wherein the optical element (5) is a diffractive optical element.

12. Method for welding by means of a laser beam, wherein the welding method includes the following steps:
generating a laser beam;
collimating the laser beam by means of a collimator (2); and
focusing the collimated laser beam by means of a focusing means (3) onto a concentrated point on a workpiece (4) to be welded,
wherein the collimated laser beam is passed through an optical element (5) between the collimator (2) and the focusing means (3) in order to spread a power distribution of the laser beam along a first direction running at an angle to an axis of the collimated laser beam,
**characterized by**
arranging a bifocal element (6) either between the optical element (5) and the collimator (2) or between the optical element (5) and the focusing means (3).

13. Method for welding by means of a laser beam, wherein the welding method includes the following steps:
generating a laser beam;
collimating the laser beam by means of a collimator (2); and
focusing the collimated laser beam by means of a focusing means (3) onto a concentrated point on a workpiece (4) to be welded,
wherein the generated laser beam is passed through an optical element (5) between the source (1) for the laser beam and the collimator (2) in order to spread a power distribution of the laser beam along a first direction running at an angle to an axis of the collimated laser beam,
**characterized by**
arranging a bifocal element (6) between the collimator (2) and the focusing means (3).

## Patentansprüche

1. Laserschweiß-System, das umfasst:
eine Quelle (1) für einen Laserstrahl;
einen Kollimator (2), der zum Kollimieren des Laserstrahls eingerichtet ist; und
eine Fokussier-Einrichtung (3), die zum Fokussieren des kollimierten Laserstrahls auf einen konzentrierten Punkt auf einem zu verschweißenden Werkstück (4) eingerichtet ist,
wobei ein optisches Element (5) zwischen dem Kollimator (2) und der Fokussier-Einrichtung (3) angeordnet ist, und das optische Element so eingerichtet ist, dass es eine Energieverteilung des Laserstrahls in einer ersten Richtung streut, die in einem Winkel zu einer Achse des kollimierten Laserstrahls verläuft,
**gekennzeichnet durch**
ein bifokales Element (6), das entweder zwischen dem optischen Element (5) und dem Kollimator (2) oder zwischen dem optischen Element (5) und der Fokussier-Einrichtung (3) angeordnet ist.

2. Laserschweiß-System, das umfasst:
eine Quelle (1) für einen Laserstrahl;
einen Kollimator (2), der zum Kollimieren des Laserstrahls eingerichtet ist; und
eine Fokussier-Einrichtung (3), die zum Fokussieren des kollimierten Laserstrahls auf einen konzentrierten Punkt auf einem zu verschweißenden Werkstück (4) eingerichtet ist,
wobei ein optisches Element (5) zwischen der Quelle (1) für den Laserstrahl und dem Kollimator (2) angeordnet ist, und das optische Element so eingerichtet ist, dass es eine Energieverteilung des Laserstrahls in einer ersten Richtung streut, die in einem Winkel zu einer Achse des kollimierten Laserstrahls verläuft,
**gekennzeichnet durch**
ein bifokales Element (6), das zwischen dem Kollimator (2) und der Fokussier-Einrichtung (3) angeordnet ist.

3. Laserschweiß-System nach Anspruch 1 oder 2, wobei die erste Richtung im Wesentlichen senkrecht zu der Achse des kollimierten Laserstrahls verläuft.

4. Laserschweiß-System nach einem der Ansprüche 1 bis 3, wobei das optische Element (5) so eingerichtet ist, dass es die Energieverteilung des Laserstrahls auf wenigstens zwei Punkte auf dem zu verschweißenden Werkstück (4) streut, wobei die wenigstens zwei Punkte vorzugsweise in Reihe angeordnet sind.

5. Laserschweiß-System nach einem der Ansprüche 1 bis 4, wobei das optische Element (5) so eingerichtet ist, dass es die Energieverteilung des Laserstrahls entlang wenigstens einer Linie auf dem zu verschweißenden Werkstück (4) streut.

6. Laserschweiß-System nach Anspruch 5, wobei das optische Element (5) so eingerichtet ist, dass es die Energieverteilung des Laserstrahls entlang wenigstens zweier Linien auf dem zu verschweißenden Werkstück (4) streut, wobei die wenigstens zwei Linien vorzugsweise in Reihe angeordnet sind.

7. Laserschweiß-System nach einem der Ansprüche 1 bis 6, wobei das optische Element (5) so eingerichtet ist, dass es die Energieverteilung des Laserstrahls in der ersten Richtung und einer zweiten Richtung streut, wobei die zweite Richtung in einem Winkel zu der Achse des kollimierten Laserstrahls und der ersten Richtung verläuft.

8. Laserschweiß-System nach Anspruch 7, wobei die zweite Richtung im Wesentlichen senkrecht zu der Achse des kollimierten Laserstrahls und der ersten Richtung verläuft.

9. Laserschweiß-System nach Anspruch 7 oder 8, wobei das optische Element (5) so eingerichtet ist, dass es die Energieverteilung des Laserstrahls entsprechend einer quaderförmigen, rechteckigen, trapezförmigen, ovalen oder/und ringförmigen Struktur auf dem zu verschweißenden Werkstück (4) streut.

10. Laserschweiß-System nach einem der Ansprüche 1 bis 9, wobei das optische Element (5) eine Anordnung von Mikrolinsen ist.

11. Laserschweiß-System nach einem der Ansprüche 1 bis 9, wobei das optische Element (5) ein beugendes optisches Element ist.

12. Verfahren zum Schweißen mittels eines Laserstrahls, wobei das Schweißverfahren die folgenden Schritte einschließt:
Erzeugen eines Laserstrahls;
Kollimieren des Laserstrahls mittels eines Kollimators (2); und
Fokussieren des kollimierten Laserstrahls mittels einer Fokussier-Einrichtung (3) auf einen konzentrierten Punkt auf einem zu verschweißenden Werkstück (4),
wobei der kollimierte Laserstrahl durch ein optisches Element (5) zwischen dem Kollimator (2) und der Fokussier-Einrichtung (3) hindurchgeleitet wird, um eine Energieverteilung des Laserstrahls in einer ersten Richtung zu streuen, die in einem Winkel zu einer Achse des kollimierten Laserstrahls verläuft,
**gekennzeichnet durch**
Anordnen eines bifokalen Elementes (6) entweder zwischen dem optischen Element (5) und dem Kollimator (2) oder zwischen dem optischen Element (5) und der Fokussier-Einrichtung (3).

13. Verfahren zum Schweißen mittels eines Laserstrahls, wobei das Schweißverfahren die folgenden Schritte einschließt:
Erzeugen eines Laserstrahls;
Kollimieren des Laserstrahls mittels eines Kollimators (2); und
Fokussieren des kollimierten Laserstrahls mittels einer Fokussier-Einrichtung (3) auf einen konzentrierten Punkt auf einem zu verschweißenden Werkstück (4),
wobei der erzeugte Laserstrahl durch ein optisches Element (5) zwischen der Quelle (1) für den Laserstrahl und dem Kollimator (2) hindurchgeleitet wird, um eine Energieverteilung des Laserstrahls in einer ersten Richtung zu streuen, die in einem Winkel zu einer Achse des kollimierten Laserstrahls verläuft,
**gekennzeichnet durch**
Anordnen eines bifokalen Elementes (6) zwischen dem Kollimator (2) und der Fokussier-Einrichtung (3).

## Revendications

1. Système de soudage au laser comprenant :
une source (1) pour un faisceau laser ;
un collimateur (2) qui est adapté pour collimater le faisceau laser ; et
un moyen de focalisation (3) qui est adapté pour focaliser le faisceau laser collimaté sur un point concentré sur une pièce d'ouvrage (4) à souder,
dans lequel un élément optique (5) est disposé entre le collimateur (2) et le moyen de focalisation (3), l'élément optique étant adapté pour diffuser une répartition de puissance du faisceau laser sur une première direction orientée selon un angle par rapport à un axe du faisceau laser collimaté,
**caractérisé par**
un élément bifocal (6) qui est disposé soit entre l'élément optique (5) et le collimateur (2), soit entre l'élément optique (5) et le moyen de focalisation (3).

2. Système de soudage au laser comprenant :
une source (1) pour un faisceau laser,
un collimateur (2) qui est adapté pour collimater le faisceau laser, et
un moyen de focalisation (3) qui est adapté pour focaliser le faisceau laser collimaté sur un point concentré sur une pièce d'ouvrage (4) à souder,
dans lequel un élément optique (5) est disposé entre la source (1) pour le faisceau laser et le collimateur (2), l'élément optique étant adapté pour diffuser une répartition de puissance du faisceau laser sur une première direction orientée selon un angle par rapport à un axe du faisceau laser collimaté,
**caractérisé par**
un élément bifocal (6) qui est disposé entre le collimateur (2) et le moyen de focalisation (3).

3. Système de soudage au laser selon la revendication 1 ou 2, dans lequel la première direction s'oriente substantiellement perpendiculairement à l'axe du faisceau laser collimaté.

4. Système de soudage au laser selon l'une des revendications 1 à 3, dans lequel l'élément optique (5) est adapté pour diffuser la répartition de puissance du faisceau laser sur au moins deux points sur la pièce d'ouvrage (4) à souder, l'au moins deux points étant de préférence disposés en série.

5. Système de soudage au laser selon l'une des revendications 1 à 4, dans lequel l'élément optique (5) est adapté pour diffuser la répartition de puissance du faisceau laser sur au moins une ligne sur la pièce d'ouvrage (4) à souder.

6. Système de soudage au laser selon la revendication 5, dans lequel l'élément optique (5) est adapté pour diffuser la répartition de puissance du faisceau laser sur au moins deux lignes sur la pièce d'ouvrage (4) à souder, l'au moins deux lignes étant de préférence disposées en série.

7. Système de soudage au laser selon l'une des revendications 1 à 6, dans lequel l'élément optique (5) est adapté pour diffuser la répartition de puissance du faisceau laser sur la première direction et une deuxième direction,
la deuxième direction étant orientée selon un angle par rapport à l'axe du faisceau laser collimaté et à la première direction.

8. Système de soudage au laser conformément à la revendication 7, dans lequel la deuxième direction s'oriente substantiellement perpendiculairement à l'axe du faisceau laser collimaté et à la première direction.

9. Système de soudage au laser selon la revendication 7 ou 8, dans lequel l'élément optique (5) est adapté pour diffuser la répartition de puissance du faisceau laser conformément à au moins un schéma cuboïde, rectangulaire, trapézoïdal, ovoïde ou annulaire sur la pièce d'ouvrage (4) à souder.

10. Système de soudage au laser selon l'une des revendications 1 à 9, dans lequel l'élément optique (5) est une disposition de microlentilles.

11. Système de soudage au laser selon l'une des revendications 1 à 9, dans lequel l'élément optique (5) est un élément optique diffractif.

12. Procédé de soudage au moyen d'un faisceau laser, dans lequel le procédé de soudage comprend les étapes suivantes :
génération d'un faisceau laser ;
collimation du faisceau laser au moyen d'un collimateur (2) ; et
focalisation du faisceau laser collimaté au moyen d'un moyen de focalisation (3) sur un point concentré sur une pièce d'ouvrage (4) à souder,
dans lequel le faisceau laser collimaté traverse un élément optique (5) entre le collimateur (2) et le moyen de focalisation (3) afin de diffuser une répartition de puissance du faisceau laser sur une première direction orientée selon un angle par rapport à un axe du faisceau laser collimaté,
**caractérisé par**
une disposition d'un élément bifocal (6) soit entre l'élément optique (5) et le collimateur (2), soit entre l'élément optique (5) et le moyen de focalisation (3).

13. Procédé de soudage au moyen d'un faisceau laser, dans lequel le procédé de soudage comprend les étapes suivantes :
génération d'un faisceau laser ;
collimation du faisceau laser au moyen d'un collimateur (2) ; et
focalisation du faisceau laser collimaté au moyen d'un moyen de focalisation (3) sur un point concentré sur une pièce d'ouvrage (4) à souder,
dans lequel le faisceau laser généré traverse un élément optique (5) entre la source (1) pour le faisceau laser et le collimateur (2)
afin de diffuser une répartition de puissance du faisceau laser sur une première direction orientée selon un angle par rapport à un axe du faisceau laser collimaté,
**caractérisé par**
une disposition d'un élément bifocal (6) entre le collimateur (2) et le moyen de focalisation (3).
